# EUROPEAN PATENT SPECIFICATION

(11) **EP 4 265 521 B1**
(45) Date of publication and mention of the grant of the patent: **09.04.2025**
(21) Application number: 23168920.9
(22) Date of filing: 20.04.2023
(51) Int. Cl.: B64D 13/06

(54) **ENVIRONMENTAL CONTROL SYSTEM WITH AIR POWERED PUMP**
KLIMAREGELUNGSSYSTEM MIT LUFTBETRIEBENER PUMPE
SYSTÈME DE CONTRÔLE ENVIRONNEMENTAL AVEC POMPE PNEUMATIQUE

(30) Priority: 20.04.2022 US 202217725052
(43) Date of publication of application: 25.10.2023
(73) Proprietor: Hamilton Sundstrand Corporation, Charlotte, NC 28217-4578 (US)
(72) Inventor: RETERSDORF, Alan, Avon, CT (US)
(74) Representative: Dehns

(56) References cited:
- EP-A1- 3 835 208
- US-A- 4 553 407
- US-A- 5 918 472
- US-A1- 2013 160 472

## Description

### BACKGROUND

Embodiments of the present disclosure relate to an environmental control system for an aircraft, and more particularly, to an environmental control system including a pump driven by an air flow.

Aircraft that fly at altitudes above that at which ambient air is suitable for the health and comfort of crew and passengers are often equipped with environmental air conditioning systems. Such systems provide pressurized conditioned air for cooling passengers, crew, and other aircraft systems and components. These air conditioning systems typically use high pressure air bled from a turbine engine or auxiliary power unit (APU). This high-pressure air is typically at a temperature and pressure far in excess of the temperature and pressure required for conditioned air to be supplied to the cockpit and passenger cabin, so it must be expanded and cooled by the air conditioning system before it can be discharged into the aircraft cabin as conditioned air.

The high-pressure air bled from a turbine engine or auxiliary power unit is typically cooled within the air conditioning system by rejecting heat therefrom directly to a ram air circuit. However, the use of engine bleed air increases the overall fuel burn of the system and ram air heat exchangers typically must be large to provide an acceptable heat sink for cooling the bleed air. US 2013/0160472 A1 describes an aircraft air conditioning system. US 5,918,472 describes an air cycle environmental control system. US 4,553,407 describes a high efficiency air cycle air conditioning system. EP 3 835 208 A1 describes a bootstrap air cycle with vapour power turbine.

### BRIEF DESCRIPTION

An environmental control system of a vehicle according to independent claim 1 includes an inlet configured to receive a medium, a heat exchanger fluidly connected to the inlet to receive the medium, a water separator arranged directly downstream from the heat exchanger relative to a flow of the medium, and a ram air circuit including another inlet configured to receive ram air and including a ram air heat exchanger. A closed secondary fluid loop is operably coupled to the heat exchanger and to the ram air heat exchanger. The secondary fluid loop has a secondary fluid circulating therein that removes heat from the medium in the heat exchanger and that discharges heat to the ram air in the ram air heat exchanger.

In further embodiments the secondary fluid is a liquid, optionally

In further embodiments the system comprises an expansion device, the expansion device being operably coupled to the heat exchanger and to the ram air circuit.

In further embodiments the expansion device further comprises a turbine and a fan operably coupled by a shaft, the turbine being arranged to receive the medium from the heat exchanger, and the fan being arranged within the ram air circuit.

In further embodiments the expansion device further comprises a pump mounted to the shaft, the pump being arranged within the secondary fluid loop, wherein work extracted by the turbine is transferred to the pump via the shaft.

In further embodiments the ram air is not arranged in a direct heat exchange relationship with the medium.

In further embodiments the medium is bleed air.

In further embodiments the vehicle is an aircraft.

A method of operating an environmental control system of a vehicle according to independent claim 8 includes receiving a medium at an inlet for delivery to one or more loads at a heat exchanger, the heat exchanger being directly downstream from the inlet and removing water from the medium within a water extractor located directly downstream from the heat exchanger relative to a flow of the medium, circulating a secondary fluid within a secondary fluid loop operably coupled to the heat exchanger and a ram air circuit, cooling the medium by removing heat from the medium via the secondary fluid at the heat exchanger, and discharging heat from the secondary fluid to a ram air within the ram air circuit.

In further embodiments the method comprises extracting energy from the medium and driving a pump using the energy extracted from the medium, the circulating of the secondary fluid being performed by the pump.

In further embodiments the method comprises extracting energy from the medium; and driving a fan arranged within the ram air circuit using the energy extracted from the medium.

In further embodiments the method comprises moving the ram air through the ram air circuit in response to driving the fan.

In further embodiments the secondary fluid is a liquid.

In further embodiments the secondary fluid is water.

In further embodiments the medium is bleed air.

In further embodiments the vehicle is an aircraft.

### BRIEF DESCRIPTION OF THE DRAWINGS

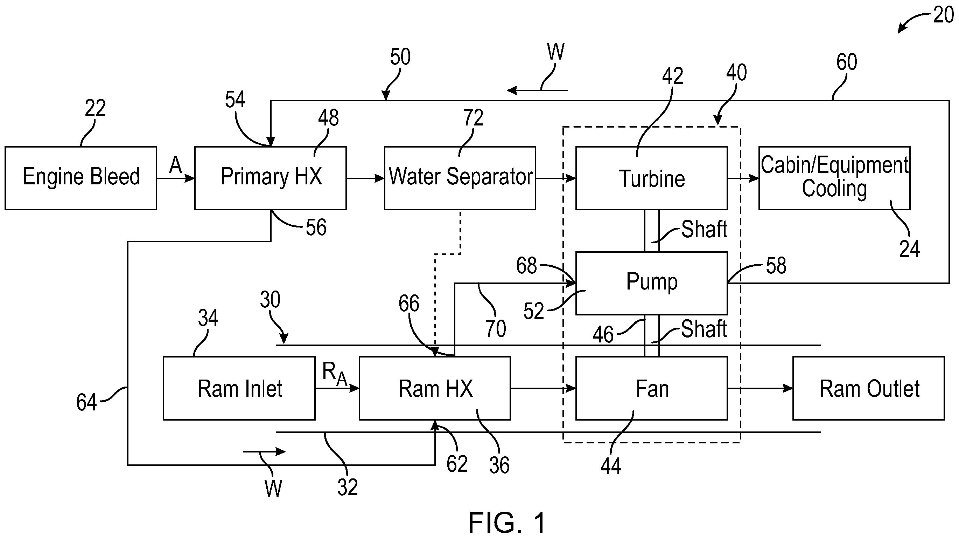

The following descriptions should not be considered limiting in any way. With reference to the accompanying drawings, like elements are numbered alike:
The Figure is a schematic diagram of an environmental control system of a vehicle according to an embodiment.

### DETAILED DESCRIPTION

A detailed description of one or more embodiments of the disclosed apparatus and method are presented herein by way of exemplification and not limitation with reference to the Figure.

With reference now to the figure, a schematic diagram of an embodiment a portion of an environmental control system (ECS) 20, such as an air conditioning unit or pack for example, is depicted according to a non-limiting embodiment. Although the environmental control system 20 is described with reference to an aircraft, alternative applications, such as another vehicle for example, are also within the scope of the disclosure. As shown, the ECS 20 may be configured to receive a medium A at an inlet 22 and provide a conditioned form of the medium A to one or more loads 24. In embodiments where the ECS 20 is used in an aircraft application, the medium A may be bleed air, which is pressurized air originating from, i.e., being "bled" from, an engine or auxiliary power unit of the aircraft. It shall be understood that one or more of the temperature, humidity, and pressure of the bleed air can vary based upon the compressor stage and revolutions per minute of the engine or auxiliary power unit from which the air is drawn.

As shown, the environmental control system 20 may include a ram air circuit 30 including a shell or duct 32 within which one or more heat exchangers are located. The ram air duct 32 can receive a medium R_{A}, such as ram air for example, at an inlet 34 and can direct the medium R_{A} through a portion of the ECS 20. The ram air R_{A} may be ambient air from outside the aircraft. The one or more heat exchangers are devices built for efficient heat transfer from one medium to another. Examples of the type of heat exchangers that may be used, include, but are not limited to, double pipe, shell and tube, plate, plate and shell, adiabatic shell, plate fin, pillow plate, and fluid heat exchangers.

The one or more heat exchangers arranged within the ram air duct 32 may be referred to as ram heat exchangers. In the illustrated, non-limiting embodiment, the ram air circuit 30 includes a single heat exchanger 36. However, embodiments having additional ram air heat exchangers are also contemplated herein. Within the ram air heat exchanger 36, ram air R_{A}, such as outside air for example, acts as a heat sink to cool another medium passing there through.

The ECS 20 additionally includes an expansion device 40. The expansion device 40 of the ECS 20 is a mechanical device that includes components for performing thermodynamic work on one or more mediums (e.g., extracts work from or applies work to a medium A by raising and/or lowering pressure and by raising and/or lowering temperature). Examples of the expansion device 40 include, but are not limited to, an air cycle machine, such as a three-wheel or four-wheel air cycle machine. In the illustrated, non-limiting embodiment, the compression device is a simple cycle or two-wheel air cycle machine.

As shown, the expansion device 40 includes a turbine 42 and a fan 44 operably coupled to one another via a shaft 46. The turbine 42 is a mechanical device that expands a medium and extracts work therefrom (also referred to as extracting energy). In the expansion device 40, the turbine 42 drives the fan 44 via the shaft 46. A fan 44 is a mechanical device that can force via push or pull methods air through the ram air duct 32, across at least a portion of one or more ram air heat exchangers 36. However, embodiments where the fan 44 is a component separate from the expansion device and is driven by any suitable means are also contemplated herein.

The ECS 20 additionally includes one or more heat exchangers or devices configured to provide efficient heat transfer from one medium to another. In the illustrated, non-limiting embodiment, the ECS 20 includes a single heat exchanger 48 arranged directly downstream from the inlet 22 of the medium A. However, embodiments including additional heat exchangers or other components at any suitable location relative to the flow of medium A or the flow of ram air R_{A} are also within the scope of the disclosure.

In the illustrated, non-limiting embodiment, the ram air R_{A} is not arranged in a direct heat exchange relationship with the medium A at either the heat exchanger 48 or the ram air heat exchanger 36. Rather, the ECS 20 uses a secondary fluid W circulating through a closed secondary fluid loop 50 to condition both the medium A and the ram air R_{A}. In an embodiment, the secondary fluid W is a liquid, such as water or another suitable liquid for example. A pump 52 may be used to circulate the secondary fluid W through the secondary fluid loop 50. In an embodiment, the pump is 52 mounted to the shaft 46 of the expansion device 40 as a third wheel and is therefore driven by rotation of the shaft 46 resulting from work or energy extracted from the medium A within the turbine 42.

The secondary fluid loop 50 is thermally coupled to both the heat exchanger 48 and the ram air heat exchanger 36. In the illustrated, non-limiting embodiment, the heat exchanger 48 includes a secondary fluid inlet 54 and a secondary fluid outlet 56. The secondary fluid inlet 54 may be connected to an outlet 58 of the pump 52 by a conduit 60. Similarly, the ram air heat exchanger 36 includes a secondary fluid inlet 62 connected to the secondary fluid outlet 56 of the heat exchanger 48 by a conduit 64. The secondary fluid outlet 66 of the ram air heat exchanger 36 is fluidly coupled to an inlet 68 of the pump 52 by a conduit 70.

In operation, the medium A is provided to the ECS 20 via the inlet 22. From the inlet 22, the medium A is delivered to the heat exchanger 48. Within the heat exchanger 48, heat transfers from the medium A to the secondary fluid W. The resulting cooled medium A may then be provided to a downstream water separator or extractor 72. In an embodiment, the heat exchanger 48 is configured as a condenser such that as the medium A cools therein, the water entrained within the medium A will condense. This condensed fluid may then be removed from the medium A within the water extractor 72. The condensed fluid, for example water, removed from the medium A may be reused elsewhere on the aircraft. In the illustrated, non-limiting embodiment, the water is sprayed on the face of the ram air heat exchanger 36.

From the water extractor 72, the dry medium A is provided to an inlet of the turbine 42. Within the turbine 42, the medium A is expanded, and work is extracted therefrom which results in a cooling and depressurization of the medium A. The cooler and lower pressure medium A provided at an outlet of the turbine 42 may then be delivered to one or more loads of the vehicle.

The work extracted from the medium A within the turbine 42, drives the pump 52 causing the secondary fluid W to circulate within the secondary fluid loop 50. The work extracted form the medium A within the turbine 42 also drives rotation of the fan 44. As a result of this rotation of the fan 44, ram air R_{A} from the inlet 26 moves through the ram air duct 32, and specifically, across the ram air heat exchanger 36. As previously noted, the heated secondary fluid W output from the heat exchanger 48 is provided to the secondary fluid inlet 62 of the ram air heat exchanger 36. Accordingly, within the ram air heat exchanger 36, heat from the secondary fluid W is transferred to the ram air R_{A}. The heated ram air R_{A} is then exhausted overboard from an outlet of the ram air duct 32.

An environmental control system 20 as described herein relies on a secondary fluid to remove heat from the medium A and then discharge that heat to the flow of ram air R_{A}. Because the ability to transfer heat is significantly increased in liquid-air heat exchangers compared to air-air heat exchangers, inclusion of the secondary fluid loop results not only in an improved ability to discharge heat to the ram air R_{A}, but also the potential to achieve cooler air temperatures at the outlet of the heat exchanger 48. Additionally, the energy required to increase a fluid's pressure via a pump is significantly less than required to increase the pressure of a gaseous medium (such as air) via a compressor which may allow for heat exchanger designs with more heat transfer surface area on the liquid sides relative to an air-air heat exchanger.

The term "about" is intended to include the degree of error associated with measurement of the particular quantity based upon the equipment available at the time of filing the application.

The terminology used herein is for the purpose of describing embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made without departing from the scope of the invention as defined by the claims. In addition, many modifications may be made to adapt a particular situation or material to the teachings of the present disclosure without departing from the scope of the invention as defined by the claims. Therefore, it is intended that the present disclosure not be limited to the particular embodiment disclosed as the best mode contemplated for carrying out this present disclosure, but that the present disclosure will include all embodiments falling within the scope of the claims.

## Claims

1. An environmental control system of a vehicle comprising:
an inlet (22) configured to receive a medium;
a heat exchanger (48) fluidly connected directly to the inlet to receive the medium; and a water separator (72);
a ram air circuit (30) including another inlet (34) configured to receive ram air and including a ram air heat exchanger (36); and
a closed secondary fluid loop (50) operably coupled to the heat exchanger (48) and to the ram air heat exchanger (36), the secondary fluid loop having a secondary fluid circulating therein that removes heat from the medium in the heat exchanger (48) and that discharges heat to the ram air in the ram air heat exchanger (36), **characterised in that** the water separator is arranged directly downstream from the heat exchanger (48) relative to a flow of the medium.

2. The environmental control system of claim 1, wherein the secondary fluid is a liquid, and optionally wherein the secondary fluid is water.

3. The environmental control system of any preceding claim, further comprising an expansion device (40), the expansion device being operably coupled to the heat exchanger (48) and to the ram air circuit (30).

4. The environmental control system of claim 3, wherein the expansion device (40) further comprises a turbine (42) and a fan (44) operably coupled by a shaft (46), the turbine being arranged to receive the medium from the heat exchanger (48), and the fan being arranged within the ram air circuit (30), and optionally wherein the expansion device further comprises a pump (52) mounted to the shaft, the pump being arranged within the secondary fluid loop, wherein work extracted by the turbine is transferred to the pump via the shaft.

5. The environmental control system of any preceding claim, wherein the ram air is not arranged in a direct heat exchange relationship with the medium.

6. The environmental control system of any preceding claim, wherein the medium is bleed air.

7. The environmental control system of any preceding claim, wherein the vehicle is an aircraft.

8. A method of operating an environmental control system of a vehicle comprising:
receiving a medium at an inlet (22) for delivery to one or more loads at a heat exchanger (48);
the heat exchanger being directly downstream from the inlet and removing water from the medium within a water extractor (72) located directly downstream from the heat exchanger (48) relative to a flow of the medium;
circulating a secondary fluid within a secondary fluid loop (50) operably coupled to the heat exchanger (48) and a ram air circuit (30);
cooling the medium by removing heat from the medium via the secondary fluid at the heat exchanger (48); and
discharging heat from the secondary fluid to a ram air within the ram air circuit (30).

9. The method of claim 8, further comprising:
extracting energy from the medium; and
driving a pump (52) using the energy extracted from the medium, the circulating of the secondary fluid being performed by the pump.

10. The method of claim 8 or 9, further comprising:
extracting energy from the medium; and
driving a fan arranged within the ram air circuit (30) using the energy extracted from the medium, and optionally further comprising moving the ram air through the ram air circuit (30) in response to driving the fan (44).

11. The method of any of claims 8 to 10, wherein the secondary fluid is a liquid, or wherein the secondary fluid is water.

12. The method of any of claims 8 to 11, wherein the medium is bleed air.

13. The method of any of claims to 12, wherein the vehicle is an aircraft.

## Patentansprüche

1. Klimaregelungssystem eines Fahrzeugs, umfassend:
einen Einlass (22), der dazu konfiguriert ist, ein Medium aufzunehmen;
einen Wärmetauscher (48), der direkt mit dem Einlass fluidverbunden ist, um das Medium aufzunehmen; und einen Wasserabscheider (72);
einen Stauluftkreislauf (30), der einen weiteren Einlass (34) beinhaltet, der dazu konfiguriert ist, Stauluft aufzunehmen, und einen Stauluft-Wärmetauscher (36) beinhaltet; und
ein geschlossenes sekundäres Fluidumlaufsystem (50), das an den Wärmetauscher (48) und den Stauluft-Wärmetauscher (36) wirkgekoppelt ist, wobei in dem sekundären Fluidumlaufsystem ein sekundäres Fluid zirkuliert, das Wärme aus dem Medium in dem Wärmetauscher (48) entnimmt und Wärme an die Stauluft in dem Stauluft-Wärmetauscher (36) abführt, **dadurch gekennzeichnet, dass** der Wasserabscheider relativ zu einer Strömung des Mediums direkt stromabwärts von dem Wärmetauscher (48) angeordnet ist.

2. Klimaregelungssystem nach Anspruch 1, wobei das sekundäre Fluid eine Flüssigkeit ist und wobei das sekundäre Fluid optional Wasser ist.

3. Klimaregelungssystem nach einem der vorhergehenden Ansprüche, ferner umfassend eine Expansionsvorrichtung (40), wobei die Expansionsvorrichtung an den Wärmetauscher (48) und den Stauluftkreislauf (30) wirkgekoppelt ist.

4. Klimaregelungssystem nach Anspruch 3, wobei die Expansionsvorrichtung (40) ferner eine Turbine (42) und einen Fan (44) umfasst, die durch eine Welle (46) wirkgekoppelt sind, wobei die Turbine angeordnet ist, um das Medium von dem Wärmetauscher (48) aufzunehmen, und der Fan innerhalb des Stauluftkreislaufs (30) angeordnet ist, und wobei die Expansionsvorrichtung optional ferner eine Pumpe (52) umfasst, die an der Welle montiert ist, wobei die Pumpe innerhalb des sekundären Fluidumlaufsystems angeordnet ist, wobei die durch die Turbine gewonnene Leistung über die Welle an die Pumpe übertragen wird.

5. Klimaregelungssystem nach einem der vorhergehenden Ansprüche, wobei die Stauluft nicht in einer direkten Wärmeaustauschbeziehung mit dem Medium angeordnet ist.

6. Klimaregelungssystem nach einem vorhergehenden Ansprüche, wobei das Medium Zapfluft ist.

7. Klimaregelungssystem nach einem der vorhergehenden Ansprüche, wobei das Fahrzeug ein Luftfahrzeug ist.

8. Verfahren zum Betreiben eines Klimaregelungssystems eines Fahrzeugs, umfassend:
Aufnehmen eines Mediums an einem Einlass (22) zur Abgabe an einen oder mehrere Verbraucher an einem Wärmetauscher (48);
wobei sich der Wärmetauscher direkt stromabwärts von dem Einlass befindet und Wasser aus dem Medium innerhalb eines Wasserextraktors (72) entnimmt, der sich relativ zu einer Strömung des Mediums direkt stromabwärts von dem Wärmetauscher (48) befindet;
Zirkulieren eines sekundären Fluids innerhalb eines sekundären Fluidumlaufsystems (50), das an den Wärmetauscher (48) und einen Stauluftkreislauf (30) wirkgekoppelt ist;
Kühlen des Mediums durch Entnehmen von Wärme aus dem Medium über das sekundäre Fluid an dem Wärmetauscher (48); und
Abführen von Wärme aus dem sekundären Fluid an eine Stauluft innerhalb des Stauluftkreislaufs (30).

9. Verfahren nach Anspruch 8, ferner umfassend:
Gewinnen von Energie aus dem Medium; und
Antreiben einer Pumpe (52) unter Verwendung der aus dem Medium gewonnenen Energie, wobei das Zirkulieren des sekundären Fluids durch die Pumpe durchgeführt wird.

10. Verfahren nach Anspruch 8 oder 9, ferner umfassend:
Gewinnen von Energie aus dem Medium; und
Antreiben eines innerhalb des Stauluftkreislaufs (30) angeordneten Fans unter Verwendung der aus dem Medium gewonnenen Energie, und optional ferner umfassend Bewegen der Stauluft durch den Stauluftkreislauf (30) als Reaktion auf das Antreiben des Fans (44).

11. Verfahren nach einem der Ansprüche 8 bis 10, wobei das sekundäre Fluid eine Flüssigkeit ist oder wobei das sekundäre Fluid Wasser ist.

12. Verfahren nach einem der Ansprüche 8 bis 11, wobei das Medium Zapfluft ist.

13. Verfahren nach einem der Ansprüche 8 bis 12, wobei das Fahrzeug ein Luftfahrzeug ist.

## Revendications

1. Système de contrôle environnemental d'un véhicule comprenant :
une entrée (22) configurée pour recevoir un milieu ;
un échangeur de chaleur (48) relié fluidiquement directement à l'entrée pour recevoir le milieu ; et un séparateur d'eau (72) ;
un circuit d'air dynamique (30) comportant une autre entrée (34) configurée pour recevoir de l'air dynamique et comportant un échangeur de chaleur à air dynamique (36) ; et
une boucle de fluide secondaire fermée (50) couplée de manière fonctionnelle à l'échangeur de chaleur (48) et à l'échangeur de chaleur à air dynamique (36), la boucle de fluide secondaire présentant un fluide secondaire circulant à l'intérieur de celle-ci qui élimine la chaleur du milieu dans l'échangeur de chaleur (48) et qui évacue la chaleur vers l'air dynamique dans l'échangeur de chaleur à air dynamique (36), **caractérisée en ce que** le séparateur d'eau est disposé directement en aval de l'échangeur de chaleur (48) par rapport à un écoulement du milieu.

2. Système de contrôle environnemental selon la revendication 1, dans lequel le fluide secondaire est un liquide, et éventuellement dans lequel le fluide secondaire est de l'eau.

3. Système de contrôle environnemental selon l'une quelconque des revendications précédentes, comprenant également un dispositif d'expansion (40), le dispositif d'expansion étant couplé de manière fonctionnelle à l'échangeur de chaleur (48) et au circuit d'air dynamique (30).

4. Système de contrôle environnemental selon la revendication 3, dans lequel le dispositif d'expansion (40) comprend également une turbine (42) et une souffleuse (44) couplés de manière fonctionnelle par un arbre (46), la turbine étant agencée pour recevoir le milieu provenant de l'échangeur de chaleur (48), et le ventilateur étant agencé à l'intérieur du circuit d'air dynamique (30), et éventuellement dans lequel le dispositif d'expansion comprend également une pompe (52) montée sur l'arbre, la pompe étant agencée à l'intérieur de la boucle de fluide secondaire, dans lequel le travail extrait par la turbine est transféré à la pompe via l'arbre.

5. Système de contrôle environnemental selon l'une quelconque des revendications précédentes, dans lequel l'air dynamique n'est pas disposé dans une relation d'échange de chaleur directe avec le milieu.

6. Système de réglage environnemental selon l'une quelconque des revendications précédentes, dans lequel le milieu est de l'air de prélèvement.

7. Système de contrôle environnemental selon l'une quelconque des revendications précédente, dans lequel le véhicule est un aéronef.

8. Système de contrôle environnemental d'un véhicule comprenant :
la réception d'un milieu à une entrée (22) pour une distribution à une ou plusieurs charges au niveau d'un échangeur de chaleur (48) ; l'échangeur de chaleur étant directement en aval de l'entrée et retirant l'eau du milieu dans un extracteur d'eau (72) situé directement en aval de l'échangeur de chaleur (48) par rapport à un écoulement du milieu ;
la circulation d'un fluide secondaire dans une boucle de fluide secondaire (50) couplée de manière opérationnelle à l'échangeur de chaleur (48) et à un circuit d'air dynamique (30) ;
le refroidissement du milieu en éliminant la chaleur du milieu via le fluide secondaire au niveau de l'échangeur de chaleur (48) ; et
la décharge de chaleur du fluide secondaire vers un air dynamique dans le circuit d'air dynamique (30).

9. Procédé selon la revendication 8, comprenant également :
l'extraction de l'énergie du milieu ; et
l'entraînement d'une pompe (52) en utilisant l'énergie extraite du milieu, la circulation du fluide secondaire étant réalisée par la pompe.

10. Procédé selon la revendication 8 ou 9, comprenant également :
l'extraction de l'énergie du milieu ; et
l'entraînement d'un ventilateur disposé dans le circuit d'air dynamique (30) en utilisant l'énergie extraite du milieu, et comprenant éventuellement également le déplacement de l'air dynamique à travers le circuit d'air dynamique (30) en réponse à l'entraînement du ventilateur (44).

11. Procédé selon l'une quelconque des revendications 8 à 10, dans lequel le fluide secondaire est un liquide, ou dans lequel le fluide secondaire est de l'eau.

12. Procédé selon l'une quelconque des revendications 8 à 11, dans lequel le milieu est l'air de purge.

13. Procédé selon l'une quelconque des revendications 8 à 12, dans lequel le véhicule est un aéronef.
